# Europäisches Patentamt
# European Patent Office
# Office européen des brevets

(11) Veröffentlichungsnummer: **0 054 155**
**B1**

(12) # EUROPÄISCHE PATENTSCHRIFT

(45) Veröffentlichungstag der Patentschrift:
09.05.84

(51) Int. Cl.³: **C 09 D 5/06, C 09 J 3/00**

(21) Anmeldenummer: **81109031.5**

(22) Anmeldetag: **27.10.81**

(54) **Klebeverfahren mittels Schmelzklebstoff sowie Mittel zur Durchführung des Verfahrens.**

(30) Priorität: **17.12.80 DE 3047635**

(43) Veröffentlichungstag der Anmeldung:
**23.06.82 Patentblatt 82/25**

(45) Bekanntmachung des Hinweises auf die Patenterteilung:
**09.05.84 Patentblatt 84/19**

(84) Benannte Vertragsstaaten:
**AT BE CH FR GB IT LI NL SE**

(56) Entgegenhaltungen:
**US - A - 4 166 058**

**Römpps Chemie - Lexikon (1977), Seite 3554**

(73) Patentinhaber: **HILTI Aktiengesellschaft,
FL-9494 Schaan (LI)**

(72) Erfinder: **Mauthe, Peter, Voestweg 10,
D-8065 Kleinberghofen (DE)**

(74) Vertreter: **Berg, Wilhelm, Dr. et al, Dr. Berg, Dipl.-Ing.
Stapf, Dipl.-Ing. Schwabe, Dr. Dr. Sandmair
Mauerkircherstrasse 45, D-8000 München 80 (DE)**

ACTORUM AG

## Beschreibung

Die vorliegende Erfindung betrifft Verfahren zur Herstellung von Verklebungen oder Abdichtungen mittels Schmelzklebstoffen sowie Schmelzklebstoffe zur Durchführung dieses Verfahrens.

Durch die Entwicklung synthetischer Klebstoffe im Gefolge der in den 20er Jahren entdeckten Polymerisationsverfahren hat die früher auf tierische und pflanzliche Klebstoffe beschränkte Klebetechnik einen ungewöhnlichen Aufschwung erfahren. Eine Sondergruppe innerhalb dieser synthetischen Klebstoffe sind dabei die Schmelzklebstoffe, da sie den Vorteil haben, dass sie lösungsmittel- und dispergiermittelfrei sind. Schmelzklebstoffe werden in zunehmendem Umfang in weiten Bereichen der Automobil-, Möbel-, Schuh-, Verpackungs-, Flugzeug- und Bauindustrie anstelle klassischer Fügeverfahren wie Schweissen, Nieten, Schrauben, Nägel usw. verwendet.

Für eine gute Klebwirkung ist zunächst eine möglichst vollständige Benetzung des Feststoffs durch den Klebstoff erforderlich. Hierzu muss der Klebstoff in flüssiger, oder präziser gesagt, niedrig-viskoser Form vorliegen. Die für eine einwandfreie Benetzung erforderliche, ausreichend niedrige Viskosität wird bei den Schmelzklebstoffen durch Erwärmen und Überführung in eine Schmelze wenigstens der erforderlichen Mindestviskosität erreicht. Bei der Abkühlung treten dann im benetzten Bereich zwischen dem Werkstoff und dem Schmelzklebstoff die gewünschten Adhäsionskräfte auf, wobei gleichzeitig im Schmelzklebstoff durch die Temperaturerniedrigung auch die Kohäsionskräfte schliesslich auf das erwünschte Mass ansteigen.

Wesentliche Voraussetzung für eine gute Verklebung ist demzufolge die Überführung des Schmelzklebers in eine Schmelze so niedriger Viskosität, dass eine wirklich vollständige Benetzung der Klebestelle gewährleistet ist.

Regelmässig werden Schmelzkleber mit sogenannten Klebepistolen verarbeitet. Diese Klebepistolen enthalten neben einem Vortriebsmechanismus eine Heizzone, in welcher der in festem Zustand meist stabförmige Schmelzklebstoff auf Temperaturen entsprechend einer Viskosität der Schmelze, bei der eine einwandfreie Vernetzung ermöglicht ist, erhitzt wird. Danach müsste eigentlich eine einwandfreie Verklebung möglich sein. Es bleibt jedoch hierbei unberücksichtigt, dass in Abhängigkeit von der Lufttemperatur an der Verarbeitungsstelle, der Temperatur des zu verklebenden Werkstoffs, dessen Wärmekapazität und dergleichen Faktoren der Schmelzklebstoff wohl mit der gewünschten Temperatur aus der Klebepistole austritt, jedoch wegen des z.B. aus vorgenannten Gründen auftretenden Temperaturabfalls an der Klebestelle eine befriedigende Benetzung nicht gewährleistet ist. Besonders nachteilig ist, dass diese unbefriedigende Benetzung und die daraus resultierende unbefriedigende Adhäsion für den Verarbeiter nicht erkennbar ist.

Aufgabe der vorliegenden Erfindung ist es demnach, ein Verfahren zur Verfügung zu stellen, welches es dem Verarbeiter schon während der Verarbeitung zeigt, ob eine ausreichende Benetzung mit dem Ergebnis einer befriedigenden Verklebung oder Abdichtung ermöglicht wird, und, sofern dies möglich ist, auch den Augenblick anzeigt, in welchem diese Bedingungen noch nicht oder nicht mehr gegeben sind.

Gegenstand der Erfindung ist demnach ein Verfahren zur Herstellung von Verklebungen oder Abdichtungen mittels Schmelzklebstoffen, wobei im Schmelzklebstoff wenigstens kurzfristig die für eine einwandfreie Benetzung des zu verklebenden oder abzudichtenden Werkstoffs erforderliche Mindesttemperatur und schliesslich zur Verklebung bzw. Abdichtung darunter liegende Temperaturen eingestellt werden, wobei erfindungsgemäss ein Schmelzklebstoff verwendet wird, der mindestens einen Thermochromfarbstoff enthält, welcher einen Farbumschlag im Temperaturbereich zeigt, in welchem die für die einwandfreie Benetzung erforderlichen Temperaturen in die eine einwandfreie Benetzung nicht gewährleistenden Temperaturen ineinander übergehen. Vorzugsweise werden solche Thermochromfarbstoffe verwendet, deren Farbumschlag bei Temperaturen etwas oberhalb der eine einwandfreie Benetzung nicht gewährleistenden Temperaturen, d.h. deren Farbumschlag bei Temperaturen etwas oberhalb der für eine einwandfreie Benetzung erforderlichen Mindesttemperatur liegt.

Es ist zwar aus der US-Patentschrift 4 166 058 bekannt, einem adhäsiven Primer hitzeempfindliche, irreversibel sich verfärbende Farbstoffe, welche den Fortschritt einer chemischen Vernetzungs- bzw. Polymerisationsreaktion anzeigen, zuzusetzen, wobei diese Farbstoffe kontinuierlich in eine Endfärbung übergehen. Dies hat aber mit der Anzeige reversibler, physikalischer Vorgänge der erfindungsgemässen Schmelzkleber nichts zu tun.

Auf dem erfindungsgemässen Weg gelingt es tatsächlich, auch dem Verarbeiter anzuzeigen, ob die für die notwendige Adhäsion erforderliche Benetzung gegeben ist, bzw. den Augenblick anzuzeigen, wo die erforderliche Temperatur unterschritten und demzufolge die vollständige Benetzung nicht mehr gewährleistet ist. Diese Verfahrensweise hat insoweit auch beachtliche Vorteile gegenüber dem Versuch, eine Verklebung dadurch zu gewährleisten, dass der zu verklebende Werkstoff auf der Klebstoff-freien Seite mit einem Thermochromfarbstoff beschichtet ist. Die Probleme der unbefriedigenden Wärmeleitung sowie die Temperatur des anderen damit zu verklebenden Werkstoffs gewährleisten keineswegs, dass bei einer solchen Verfahrensweise die für die befriedigende Benetzung erforderliche Temperatur auch tatsächlich im Schmelzklebstoff eingehalten ist.

Mit Vorteil wird bei dem erfindungsgemässen Verfahren so vorgegangen, dass Schmelzklebstoffe verwendet werden, welche einen Farbumschlag in dem oberhalb der Benetzungs-Mindesttemperatur sich anschliessenden Temperaturbereich, insbesondere im Bereich bis zu etwa 20°C oberhalb der Benetzungs-Mindesttemperatur aufweisen. Unter Benetzungstemperatur sind die Temperaturen zu verstehen, bei welcher der Schmelzklebstoff Viskositäten aufweist, welche eine einwandfreie Benetzung des zu verklebenden oder zu dichtenden Werkstoffs erlauben. Zweifellos ist entscheidend die Viskosität des Schmelzklebstoffs. Wegen der naturgesetzlichen Beziehung zwischen Viskosität und Temperatur und der Schwierigkeit einer optischen Anzeige der Viskosität liegt der Erfindung die Erkenntnis zugrunde, dass anstelle der Anzeige der erforderlichen Mindestviskosität als Messparameter die entsprechende Temperatur gewählt wird und diese Temperatur durch die Umschlagpunkte von Thermochromfarbstoffen angezeigt wird. Der erfindungsgemäss bevorzugte Farbumschlag im Bereich dicht oberhalb der Benetzungs-Mindesttemperaturzone ist auch deswegen angezeigt, weil beim Austritt aus der Schmelzpistole die Schmelzklebstoffe regelmässig eine darüberliegende Temperatur aufweisen, demzufolge bei den Verklebungs- und Abdichtungsverfahren eine Annäherung an die Benetzungs-Mindesttemperaturzone regelmässig von höheren Temperaturen aus erfolgt. Ein Farbumschlag im unteren Temperaturbereich der Benetzungs-Mindesttemperaturzone im Sinne einer Anzeige, dass nunmehr mit Sicherheit eine befriedigende Benetzung nicht mehr gegeben ist, ist jedoch im Rahmen der Erfindung keineswegs ausgeschlossen.

Erfindungsgemäss ist weiter die Verwendung solcher Schmelzklebstoffe bevorzugt, die Thermochromfarbstoffe enthalten, welche bei jenen Temperaturen, bei denen eine einwandfreie Benetzung gewährleistet ist, Signalfarben aufweisen und einen Farbumschlag in farblos bei darunterliegenden oder bei Annäherung an Temperaturen, bei denen eine einwandfreie Benetzung nicht mehr gewährleistet ist, zeigen.

Im allgemeinen liegen die eine einwandfreie Benetzung und Oberflächenhaftung gewährleistenden Viskositäten der Schmelzklebstoffe bei Temperaturen bei oder über etwa 100°C, vorzugsweise über etwa 120°C, insbesondere im Temperaturbereich von etwa 120–180°C. Vorzugsweise werden demzufolge Schmelzklebstoffe verwendet, welche einen Thermochromfarbstoff enthalten, der einen Farbumschlag im Bereich von etwa 100 bis etwa 180, vorzugsweise etwa 120 bis etwa 140°C zeigt. Es gibt aber durchaus Schmelzklebstoffe, bei denen Viskositäten, welche eine einwandfreie Benetzung gewährleisten, erst im Temperaturbereich von etwa 200°C erreicht werden. Hierzu gehören z.B. Schmelzklebstoffe auf der Basis thermoplastischer Polyamidharze.

Gemäss einer weiteren Ausführungsform werden bei dem erfindungsgemässen Verfahren Schmelzklebstoffe verwendet, welche einen gegebenenfalls weiteren Thermochromfarbstoff enthalten, der einen Farbumschlag im Bereich merklicher Zersetzungstemperatur des Schmelzklebers zeigt. Hierbei kann es sich um einen weiteren Thermochromfarbstoff handeln, wenn auch im Rahmen der Erfindung bevorzugt Thermochromfarbstoffe verwendet werden, welche zwei Farbumschlagpunkte, nämlich einen solchen im Bereich der Benetzungs-Mindesttemperatur und einen solchen im Bereich der beginnenden Zersetzungstemperatur des Schmelzklebstoffs aufweisen. Die Temperaturen, bei welchen die dem jeweiligen Schmelzklebstoff zugrunde liegenden Kunststoffe merkliche Zersetzung aufweisen bzw. bei denen derartige Zersetzungen beginnen, sind den Herstellern ohnehin bekannt und im übrigen leicht feststellbar. Häufig liegen diese Temperaturen im Bereich über 200°C, meist im Bereich von etwa 220–240°C, wenn auch höhere Temperaturen durchaus möglich und auch bekannt sind. So liegt z.B. die beginnende Zersetzung bei thermoplastischen Polyamidharzen im Bereich von etwa 300°C.

Als Schmelzklebstoffe können die bekannten Schmelzkleber auf Basis von Polyäthylen, Polypropylen, Polyisopren, Polybuten, Polyamid, Vinylpolymerisaten und Vinylcopolymerisaten, wie Äthylvinylacetaten, thermoplastischen Polyestern, Polyurethanen und dergleichen verwendet werden. Als Thermochromfarbstoffe kommen beispielsweise nachfolgende Verbindungen mit den jeweils angegebenen Umschlagtemperaturen in Betracht:

Anorganische Thermochromfarbstoffe
z.B.

| | | | |
|---|---|---|---|
| $HgJ_2$ | rot | 128°C | gelb |
| $NiNH_4PO_4 \cdot 6H_2O$ | hellgrau | 120°C | grau |
| $NH_4VO_3$ | weiss | 150°C braun 170°C | schwarz |
| $[Co(NH_3)_6]PO_4$ | gelb | 200°C | blau |
| $(NH_4)_2U_2O_7$ | gelb | 200°C | grau |
| $CoNH_4PO_4 \cdot H_2O$ | purpurrot | 140°C | tiefblau |
| Zinndithiol | scharlachrot | 100°C purpurrot 200°C | dunkelpurpur bis schwarz |

Organische
Thermochromfarbstoffe
z.B.
3-Diäthylamino-6-methyl-7-chlorfluoran
(1 Gew.Teil)

Bisphenol A (5 Gew. Teile)    rot    150°C    farblos

Kristallviolettlacton (1 Gew.Teil)
+ Bisphenol A (1 Gew.Teil)    grün    102°C    gelb

Im allgemeinen werden Schmelzklebstoffe verwendet, welche die Thermochromfarbstoffe in Mengen von 0,05–5 Gew.%, insbesondere 0,1–0,5 Gew.%, bezogen auf den Gesamtschmelzklebstoff enthalten.

Gegenstand der Erfindung sind weiter Schmelzklebstoffe, insbesondere zur Durchführung des vorgenannten Verfahrens, welche erfindungsgemäss 0,05–5 Gew.%, bezogen auf den Gesamtklebstoff, mindestens eines Thermochromfarbstoffs enthalten, der einen Farbumschlag zeigt im Temperaturbereich, in welchem die für eine einwandfreie Benetzung erforderlichen Temperaturen und die eine einwandfreie Benetzung nicht mehr gewährleistenden Temperaturen ineinander übergehen. Weiter betrifft die Erfindung Schmelzklebstoffe, in denen ein gegebenenfalls weiterer Thermochromfarbstoff enthalten ist, der einen Farbumschlag bei beginnender merklicher Zersetzung des Schmelzklebstoffs zeigt.

Meist liegt die für eine einwandfreie Benetzung erforderliche Temperatur bei oder über etwa 100°C, vorzugsweise über etwa 120°C, insbesondere zwischen etwa 120° bis etwa 180°C.

Die nachfolgenden Beispiele dienen der Erläuterung der Erfindung:

Beispiel 1
EVA-Kleber

| | |
|---|---|
| Äthylenvinylacetatcopolymer (Vinylacetatanteil 30%) | 60 Teile |
| Vinyltoluol-Acrylsäureester | 10 Teile |
| Pentaerithritharz | 10 Teile |
| Calzit | 18 Teile |
| Titandioxid | 1 Teil |
| $NH_4VO_3$ | 1 Teil |
| | 100 Teile |

Verarbeitungstemperatur grösser als 150°C, über 170°C schwarz

Beispiel 2
PA-Kleber

| | |
|---|---|
| Thermoplastisches Polyamidharz | 70 Teile |
| Maleinatharz | 10 Teile |
| Pyrogene Kieselsäure | 1 Teil |
| EVAC (Vinylacetatanteil > 30%) | 17 Teile |
| $[Co(NH_3)_6]PO_4$ | 2 Teile |
| | 100 Teile |

Der gelbe Kleber ist bei Temperatur > 200°C optimal verarbeitbar, gekennzeichnet durch seine blaue Farbe, da Farbumschlag bei 200°C.

Patentansprüche

1. Verfahren zur Herstellung von Verklebungen oder Abdichtungen mittels Schmelzklebstoffen, wobei im Schmelzklebstoff wenigstens kurzfristig die für eine einwandfreie Benetzung des zu verklebenden oder abzudichtenden Werkstoffs erforderliche Mindesttemperatur und schliesslich zur Verklebung bzw. Abdichtung darunter liegende Temperaturen eingestellt werden, dadurch gekennzeichnet, dass ein Schmelzklebstoff verwendet wird, der mindestens einen Thermochromfarbstoff enthält, welcher einen Farbumschlag in dem Temperaturbereich zeigt, bei welchem die für die einwandfreie Benetzung erforderlichen Temperaturen und die eine einwandfreie Benetzung nicht gewährleistenden Temperaturen ineinander übergehen.

2. Verfahren gemäss Anspruch 1, dadurch gekennzeichnet, dass der Schmelzklebstoff einen gegebenenfalls weiteren Thermochromfarbstoff enthält, der einen Farbumschlag bei beginnender merklicher Zersetzung des Schmelzklebstoffs zeigt.

3. Verfahren gemäss Anspruch 2, dadurch gekennzeichnet, dass die für die Oberflächenhaftung erforderliche Schmelztemperatur bei oder über etwa 100°C, vorzugsweise über etwa 120°C, insbesondere zwischen etwa 120 bis etwa 180°C liegt.

4. Schmelzklebstoffe zur Durchführung des Verfahrens nach Anspruch 1, dadurch gekennzeichnet, dass sie 0,05–5 Gew.-%, bezogen auf den Gesamtklebstoff, des Thermochromfarbstoffs enthalten.

5. Schmelzklebstoff gemäss Patentanspruch 4, dadurch gekennzeichnet, dass ein gegebenenfalls weiterer Thermochromfarbstoff enthalten ist, der einen Farbumschlag bei beginnender merklicher Zersetzung des Schmelzklebstoffs zeigt.

6. Schmelzklebstoffe gemäss Patentansprüchen 4 oder 5, dadurch gekennzeichnet, dass die für eine einwandfreie Benetzung erforderliche Temperatur bei oder über etwa 100°C, vorzugsweise über etwa 120°C, insbesondere zwischen etwa 120 bis etwa 180°C liegt.

Claims

1. A process for the production of adhesive joints or seals by means of fusible adhesives, in which process there is at least temporarily produced in the fusible adhesive the minimum temperature required for satisfactory wetting of the material requiring to be stuck or sealed, and finally temperatures below that temperature for the adhesive joint or seal, characterised in that a fusible adhesive is used which contains at least one thermochromic dye which exhibits a colour change in the temperature zone in which the temperatures required for satisfactory wetting and the temperatures which do not provide satisfactory wetting merge into one another.

2. A process according to claim 1, characterised in that the fusible adhesive contains, if required, another thermochromic dye which exhibits a colour change at the start of appreciable decomposition of the fusible adhesive.

3. A process according to claim 2, characterised in that the melting temperature required for the surface adhesion is 100°C approximately or above, preferably above approximately 120°C, more particularly between approximately 120 and approximately 180°C.

4. Fusible adhesives for performing the process according to claim 1, characterised in that with respect to the total adhesive they contain 0.05 to 5% by weight of the thermochromic dye.

5. Fusible adhesives according to claim 4, characterised in that if required another thermochromic dye is included which exhibits a colour change at the start of appreciable decomposition of the fusible adhesive.

6. Fusible adhesives according to claim 4 or 5, characterised in that the temperature required for satisfactory wetting is approximately 100°C or above, preferably above approximately 120°C, more particularly between approximately 120 and approximately 180°C.

**Revendications**

1. Procédé pour réaliser des collages ou des étanchéifications à l'aide de colles fusibles, qui consiste à porter la colle fusible au moins brièvement à la température minimale nécessaire pour réaliser un mouillage impeccable du matériau à coller ou à étanchéifier, et finalement à la porter à des températures inférieures pour réaliser le collage ou l'étanchéification, caractérisé en ce qu'il consiste à utiliser une colle fusible qui contient au moins un colorant, qui présente la propriété de thermochromie et un virage de coloration dans la plage de températures dans laquelle on passe des températures nécessaires au mouillage impeccable aux températures n'assurant pas un mouillage impeccable.

2. Procédé suivant la revendication 1, caractérisé en ce que la colle fusible contient éventuellement un autre colorant présentant la propriété des thermochromies et un virage de coloration lors du début d'une décomposition notable de la colle fusible.

3. Procédé suivant la revendication 2, caractérisé en ce que la température de fusion nécessaire au collage superficiel est de 100°C ou supérieure à 100°C environ, et de préférence supérieure à 120°C environ, notamment comprise entre 120°C et 180°C environ.

4. Colle fusible, notamment pour exécuter le procédé mentionné ci-dessus, caractérisée en ce qu'elle contient de 0,05 à 5% en poids par rapport à la colle totale d'au moins un colorant, qui présente la propriété de thermochromie et un virage de coloration dans une plage de températures dans laquelle on passe des températures nécessaires à un mouillage impeccable aux températures n'assurant pas le mouillage impeccable.

5. Colle fusible suivant la revendication 4, caractérisée en ce qu'elle comprend éventuellement un autre colorant, qui présente la propriété de thermochromie et un virage de coloration lors du début d'une décomposition notable de la colle fusible.

6. Colle fusible suivant les revendications 4 ou 5, caractérisée en ce que la température nécessaire pour un mouillage impeccable est de 100°C ou est supérieure à 100°C environ, de préférence supérieure à 120°C environ et notamment comprise entre 120 et 180°C environ.